# FASCICULE DE BREVET EUROPEEN

(11) **EP 1 240 630 B1**
(45) Date de publication et mention de la délivrance du brevet: **27.09.2006**
(21) Numéro de dépôt: 01931790.8
(22) Date de dépôt: 04.05.2001
(51) Int. Cl.: G07F 7/12

(54) **PROCEDE POUR AUTHENTIFIER UN OBJET PORTATIF, OBJET PORTATIF CORRESPONDANT, ET APPAREIL POUR METTRE EN OEUVRE LE PROCEDE**
VERFAHREN ZUM BEGLAUBIGEN EINES TRAGBAREN GEGENSTANDES, DAZUGEHÖRIGER TRAGBARER GEGENSTAND, UND VORRICHTUNG ZUM DURCHFÜHREN DES VERFAHRENS
METHOD FOR AUTHENTICATING A PORTABLE OBJECT, CORRESPONDING PORTABLE OBJECT, AND APPARATUS THEREFOR

(30) Priorité: 09.05.2000 FR 0005894
(43) Date de publication de la demande: 18.09.2002
(73) Titulaire: CP8 TECHNOLOGIES, 78431 Louveciennes (FR)
(72) Inventeur: HAZARD, Michel, F-78124 Mareil sur Mauldre (FR)
(74) Mandataire: Cassagne, Philippe M.J.
(86) Numéro de dépôt international: PCT/FR2001/001359
(87) Numéro de publication internationale: WO 2001/086601

(56) Documents cités:
- EP-A- 0 281 058
- EP-A- 0 475 837
- EP-A- 0 531 194
- EP-A- 0 926 624
- WO-A-98/37663
- FR-A- 2 757 979

## Description

De nombreux domaines d'activité ont aujourd'hui recours à des objets portatifs comportant des moyens de traitement d'information et des moyens de mémorisation d'information, notamment sous la forme de cartes à microprocesseur, pour sécuriser les accès aux services qu'ils offrent. Bien que présentant un niveau de sécurité élevé, ces objets portatifs ne procurent pas une sécurité totale : pour les applications les plus sensibles (porte-monnaie électronique, carte de débit/crédit pour le paiement, télévision à péage), l'authentification de l'objet portatif au moyen de la cryptographie symétrique voire asymétrique s'avère insuffisante. En effet, ce moyen d'authentification repose sur la détention, par les objets portatifs, de clés secrètes. Or, l'expérience prouve que des fraudeurs, très compétents et disposant de moyens importants, arrivent à découvrir des clés secrètes se trouvant pourtant dans des zones mémoire normalement inaccessibles depuis l'extérieur des objets portatifs. Une clé secrète corrompue permet à un fraudeur ou à une organisation frauduleuse de tirer un avantage substantiel en vendant à bas prix des objets portatifs clonés offrant les mêmes services que les objets portatifs authentiques. Le fraudeur réalisera un objet portatif clone de l'objet portatif authentique en réalisant un produit répondant aux fonctions de l'objet portatif authentique, sans prendre en compte tout ce qui limite l'usage de l'objet portatif et tout ce qui concerne la sécurité du produit.

Dans le domaine des cartes à puce, lorsqu'un opérateur de télécommunications, de télévision, ou une institution bancaire a recours à la carte, il met en place une procédure d'acceptation du produit, qui comporte deux volets :
1) l'homologation fonctionnelle du produit, qui garantit la conformité au cahier des charges ;
2) l'évaluation sécuritaire du produit, qui permet de vérifier que les exigences sécuritaires sont satisfaites.

Une fois le produit accepté (sur le plan matériel et logiciel), il n'existe pas de moyen de vérifier qu'une carte a fait l'objet d'une procédure d'acceptation, autre que par l'authentification utilisant une clé secrète, ce qui suppose que cette clé n'a en aucun cas pu être corrompue et ne peut donc qu'être associée à un produit accepté.

L'objet de la présente invention consiste à offrir une solution au problème posé. L'idée de base repose sur le fait qu'une clé secrète ne doit pas être dissociée du produit qui l'exploite, et notamment du code ou programme exécuté par les moyens de traitement d'information de l'objet portatif. Par voie de conséquence, il convient, de façon dynamique, d'authentifier le code avant de faire confiance aux clés. Par « authentification dynamique », on entend une authentification effectuée de façon répétée au cours de la vie de l'objet portatif, plus précisément à l'occasion des différentes sessions dans lesquelles l'objet portatif est utilisé. Par exemple, dans le domaine de la télévision à péage, on authentifiera le code pendant l'émission, à intervalles de temps prédéterminés ; dans le domaine du paiement, on authentifiera le code lors de chaque transaction effectuée dans le cas où le terminal coopérant avec l'objet portatif est en mode « connecté » à une autorité.

L'invention telle que definie par les revendications 1, 11 et 13 concerne à cet effet un procédé pour authentifier un objet portatif comprenant des moyens de traitement d'information et des moyens de mémorisation d'information, les moyens de mémorisation d'information contenant au moins un code définissant des opérations susceptibles d'être exécutées par l'objet portatif, ainsi qu'une fonction à sens unique, caractérisé en ce qu'il comprend l'étape consistant à envoyer à l'objet portatif un ordre pour que celui-ci exécute un calcul d'un résultat en appliquant à ladite fonction à sens unique au moins une partie dudit code, ce résultat étant utilisé pour décider si l'objet portatif est authentique ou non.

L'invention concerne un procédé pour faire exécuter par un objet portatif une opération sensible, l'objet portatif comprenant des moyens de traitement d'information et des moyens de mémorisation d'information, les moyens de mémorisation d'information contenant au moins un code définissant des opérations susceptibles d'être exécutées par l'objet portatif, ainsi qu'une fonction à sens unique, caractérisé en ce qu'il comprend l'étape consistant à envoyer à l'objet portatif un ordre pour que celui-ci exécute un calcul d'un résultat en appliquant à ladite fonction à sens unique au moins une partie dudit code , ledit résultat intervenant dans la mise en oeuvre de ladite opération sensible, cette opération n'étant réalisée avec succès que dans le cas où l'objet portatif est authentique.

L'invention concerne encore un objet portatif comprenant des moyens de traitement d'information et des moyens de mémorisation d'information, les moyens de mémorisation d'information contenant au moins un code définissant des opérations susceptibles d'être exécutées par l'objet portatif, ainsi qu'une fonction à sens unique, caractérisé en ce qu'il comprend des moyens pour exécuter un calcul d'un résultat en appliquant à ladite fonction à sens unique au moins une partie dudit code.

L'invention concerne enfin un appareil comprenant des moyens de traitement d'information et des moyens de mémorisation d'information et agencé pour communiquer avec un objet portatif afin d'authentifier celui-ci, l'objet portatif comprenant des moyens de traitement d'information et des moyens de mémorisation d'information, les moyens de mémorisation d'information de l'objet portatif contenant au moins un code définissant des opérations susceptibles d'être exécutées par l'objet portatif, ainsi qu'une fonction à sens unique, caractérisé en ce qu'il comprend des moyens pour envoyer à l'objet portatif un ordre pour que celui-ci exécute un calcul d'un résultat en appliquant à ladite fonction à sens unique au moins une partie dudit code de l'objet portatif.

D'autres détails et avantages de la présente invention apparaîtront au cours de la description suivante d'un mode d'exécution préféré mais non limitatif, en regard des dessins annexés sur lesquels :
La figure 1 représente un objet portatif coopérant avec un dispositif de traitement d'information ;
La figure 2 est un organigramme d'une procédure de vérification d'une signature calculée par un objet portatif sur un code qu'il détient ;
La figure 3 représente un format de message envoyé à l'objet portatif pour que celui-ci calcule une signature de code ; et
La figure 4 représente une procédure d'authentification d'une carte à puce, conformément aux normes GSM.

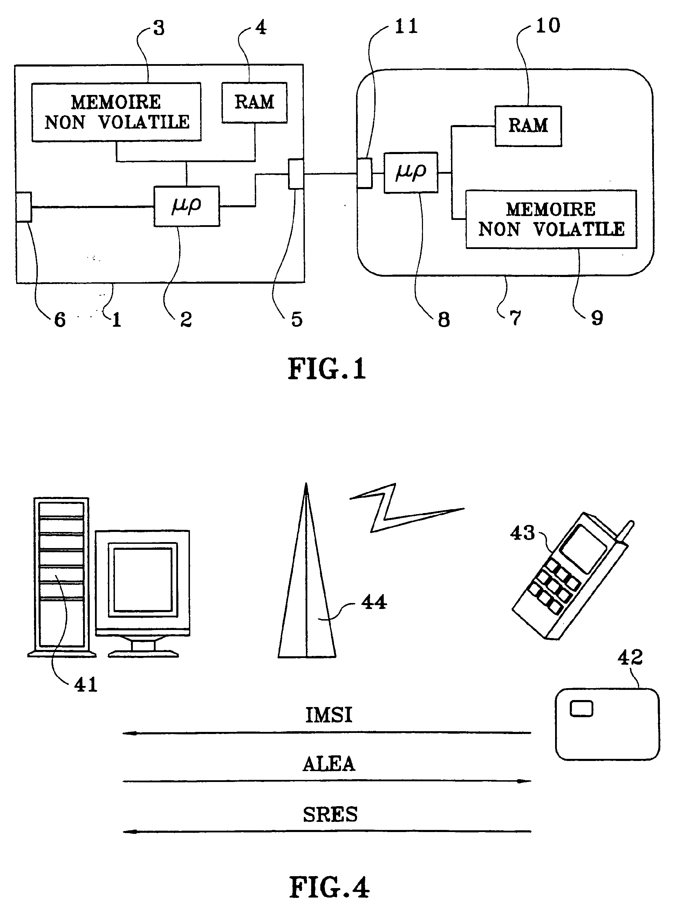

La figure 1 représente un dispositif de traitement d'information 1 coopérant avec un objet portatif 7. Le dispositif de traitement d'information comprend de façon connue en soi des moyens de traitement d'information 2 auxquels sont reliés une mémoire non volatile 3, une mémoire RAM 4, des moyens 5 pour coopérer, avec ou sans contact physique, avec l'objet portatif 7, et une interface de transmission 6 permettant au dispositif de traitement d'information de communiquer avec un réseau de communication d'information. Le dispositif de traitement d'information 1 peut en outre être équipé de moyens de stockage tels que des disquettes ou disques amovibles ou non, de moyens de saisie (tels qu'un clavier et/ou un dispositif de pointage du type souris) et de moyens d'affichage, ces différents moyens n'étant pas représentés sur la figure 1.

Le dispositif de traitement d'information peut être constitué par tout appareil informatique installé sur un site privé ou public et apte à fournir des moyens de gestion de l'information ou de délivrance de divers biens ou services, cet appareil étant installé à demeure ou portable. Il peut notamment s'agir aussi d'un appareil dédié aux télécommunications.

Par ailleurs, l'objet portatif 7 porte une puce incluant des moyens de traitement d'information 8, reliés d'un côté à une mémoire non volatile 9 et à une mémoire volatile de travail RAM 10, et reliés d'un autre côté à des moyens 11 pour coopérer avec le dispositif de traitement d'information 1. La mémoire non volatile 9 peut comprendre une partie non modifiable ROM et une partie modifiable EPROM, EEPROM, ou constituée de mémoire RAM du type "flash" ou FRAM (cette dernière étant une mémoire RAM ferromagnétique), c'est-à-dire présentant les caractéristiques d'une mémoire EEPROM avec en outre des temps d'accès identiques à ceux d'une RAM classique.

En tant que puce, on pourra notamment utiliser un microprocesseur autoprogrammable à mémoire non volatile, tel que décrit dans le brevet américain n° 4.382.279 au nom de la Demanderesse. Dans une variante, le microprocesseur de la puce est remplacé - ou tout du moins complété - par des circuits logiques implantés dans une puce à semi-conducteurs. En effet, de tels circuits sont aptes à effectuer des calculs, notamment d'authentification et de signature, grâce à de l'électronique câblée, et non microprogrammée. Ils peuvent notamment être de type ASIC (de l'anglais « Application Specific Integrated Circuit »). Avantageusement, la puce sera conçue sous forme monolithique.

L'objet portatif stocke, dans une zone de sa mémoire non volatile 9 qui est de préférence accessible seulement aux moyens de traitement 8, un code ou programme de fonctionnement incluant l'un ou plusieurs des programmes suivants :
- un système d'exploitation correspondant à un programme gérant des fonctions de base de l'objet portatif ;
- un programme effectuant une interprétation entre un langage système et un langage de plus haut niveau ;
- un ou plusieurs programmes d'application correspondant à une ou plusieurs applications offertes par l'objet portatif (application carte bancaire, application porte-monnaie électronique, application contrôle d'accès des personnes, etc...).

De préférence et comme expliqué par la suite, ce code inclura une partie de « programme machine » ou programme écrit avec un langage propre aux moyens de traitement 8.

Ce code peut être stocké dans une zone de mémoire ROM masquée ou dans une zone de mémoire EEPROM de la mémoire non volatile 9, ou encore en partie dans ces deux zones. Le code inclut une routine de signature apte à calculer une signature d'une partie paramétrable du code. Avantageusement, la routine de signature comprend une fonction apte à calculer un condensé de la partie de code : il s'agit par exemple d'un checksum (ou somme de contrôle) ou d'une fonction de hachage telle que MD5 ou SHA, manipulant des bits du code en leur appliquant une fonction mathématique. La routine de signature comprend encore un algorithme de signature apte à signer le condensé de la partie de code : il peut s'agir d'un algorithme symétrique tel que le triple DES (de l'anglais Data Encryption Standard) en mode « MAC » (de l'anglais « Message Authentication Code » ou code d'authentification de message) ou d'un algorithme asymétrique tel que le RSA (des auteurs Rivest, Shamir, et Adleman). L'algorithme de signature utilise une clé secrète K₁ qui, soit est fournie à l'objet portatif au moment de calculer la signature, soit est stockée dans une zone secrète de la mémoire non volatile 9 de l'objet portatif, accessible aux seuls moyens de traitement d'information 8. Un avantage de la première solution est qu'elle permet de modifier dans le temps la clé secrète utilisée. Dans le cas où la clé secrète K₁ est fournie à l'objet portatif, elle l'est de préférence sous forme chiffrée au moyen d'une autre clé K₂ , l'objet portatif détenant, selon le type d'algorithme de chiffrement utilisé, soit cette même clé, soit une clé corrélée à celle-ci, en vue de déchiffrer la clé secrète K₁. De façon connue en soi, le calcul de signature comme celui de chiffrement fait intervenir un aléa fourni à l'objet portatif.

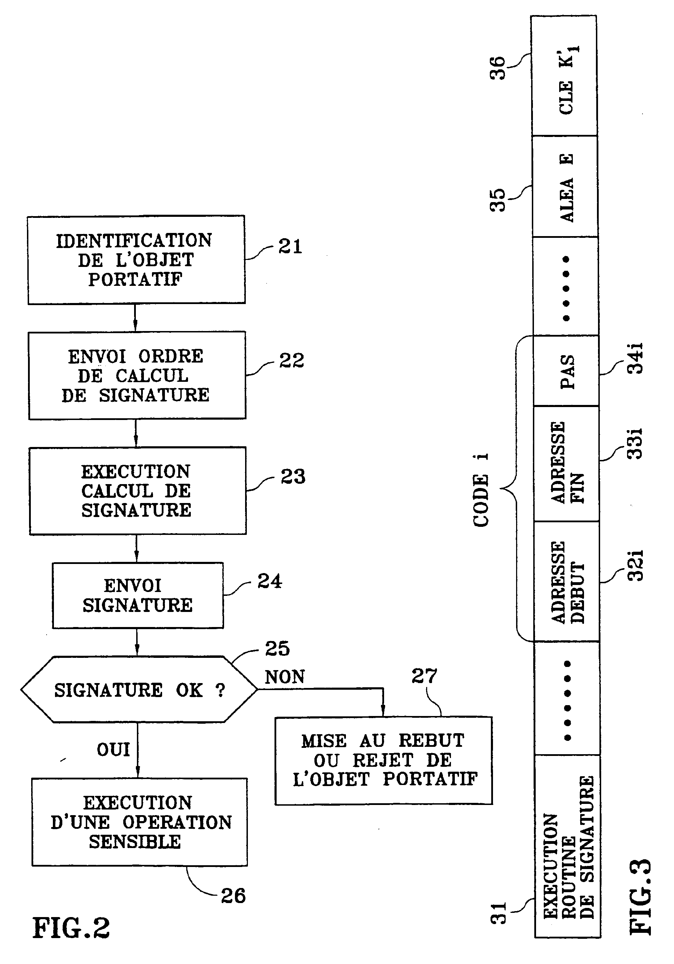

La procédure de communication avec l'objet portatif est représentée sur la figure 2. Le document EP-A-281 058 décrit une procédure très similaire. On suppose que le terminal doit donner à l'objet portatif un ordre d'exécuter une opération sensible déterminée, opération qui requiert au préalable l'authentification du code contenu dans l'objet portatif. A l'étape 21, le terminal 1 transmet à l'objet portatif un ordre de lecture d'informations d'identification de l'objet portatif, stockées en mémoire de l'objet portatif et définissant le type de la puce portée par cet objet et le numéro de version de son système d'exploitation. A l'étape 22, le terminal 1 transmet à l'objet portatif un ordre de calcul de signature pour que celui-ci exécute la routine de signature. Selon une première forme de réalisation dans laquelle le terminal est en mode « connecté » à une autorité via un réseau de communication d'information, c'est-à-dire à un organisme responsable d'une opération sensible à exécuter par l'objet portatif, l'ordre de calcul de signature est émis par l'autorité, le terminal se contentant de transmettre cet ordre à l'objet portatif. Selon une seconde forme de réalisation dans laquelle le terminal est en mode « non connecté » à l'autorité, l'ordre de calcul de signature est émis par le terminal lui-même. Dans tous les cas, l'ordre de calcul de signature prend la forme d'un message dont le format est, selon une forme de réalisation préférée, représenté à la figure 3. Ce message comprend tout d'abord un ordre 31 d'exécuter la routine de signature. Il comprend ensuite, pour chaque code i d'un ensemble de codes 1 à n éventuellement impliqués dans le calcul de signature, une adresse de début 32i désignant l'endroit du code i de l'objet portatif où doit commencer la partie de code à considérer, une adresse de fin 33i où doit se terminer cette partie de code, et un pas 34i définissant, parmi les octets composant le code i, ceux qui seront considérés : par exemple, si ce pas est égal à 7, cela signifie que l'objet portatif considérera, pour son calcul, un octet sur sept, soit le premier octet, puis le huitième, puis le quinzième, etc...Le message comprend ensuite un aléa E (35) qui interviendra dans le calcul de signature puis, seulement dans le cas où la clé secrète de signature n'est pas stockée dans l'objet portatif, cette clé secrète de signature K₁' (36), chiffrée. De préférence, les valeurs suivantes changent à chaque procédure de vérification de signature : adresses de début, adresses de fin, pas, aléa E ; on notera cependant qu'une sécurité satisfaisante est déjà obtenue en ne faisant varier que l'une de ces valeurs.

On notera que, dans le cas où l'un des codes impliqués dans le calcul de signature est écrit en un langage évolué et non dans le langage machine propre aux moyens de traitement 8 de l'objet portatif, ce qui est peut être par exemple le cas pour une application bancaire, les adresses de début 32i et de fin 33i sont remplacées par un identifiant général de ce code.

De préférence, lorsque la clé secrète de signature K₁' est présente dans le message, le message inclura en outre un checksum ou une signature du message. A réception du message par l'objet portatif, celui-ci recalculera le checksum ou la signature, ce qui lui permettra :
- de s'assurer de l'origine du message ;
- de vérifier qu'il n'y a pas eu d'incident de transmission.

A l'étape 23, l'objet portatif exécute le calcul de signature. Dans le cas où il a reçu la clé secrète chiffrée K₁', il déchiffre cette clé au moyen d'une clé de déchiffrement. Il calcule un condensé des parties de code à considérer, puis il signe ce condensé avec la clé secrète K₁ en faisant intervenir l'aléa E. A l'étape 24, l'objet portatif transmet la signature ainsi calculée au terminal 1.

Dans le cas où le terminal fonctionne en mode « non connecté », il vérifie lui-même la signature (étape 25). De préférence, le terminal ne connaît ni le (les) code(s) authentique(s), ni la clé K₁ , laquelle est supposée être détenue par l'objet portatif. L'autorité fournit au terminal un message conforme à la figure 3, à l'exception de la clé K₁', et une signature précalculée correspondant à ce message particulier. Le terminal enverra à l'objet portatif ledit message et, à réception de la signature en provenance de l'objet portatif, vérifiera celle-ci par comparaison avec sa signature précalculée. Si la comparaison aboutit positivement, le ou les codes de l'objet portatif sont authentifiés et le terminal donne l'ordre à l'objet portatif d'exécuter l'opération sensible précitée (étape 26). Dans la négative, le terminal met au rebut ou rejette l'objet portatif (étape 27).

Dans le cas où le terminal fonctionne en mode « connecté » à une autorité, c'est l'autorité qui émet le message de la figure 3, lequel sera retransmis par le terminal à l'objet portatif. L'autorité stocke à cet effet dans une mémoire le ou les codes de l'objet portatif et, soit la clé secrète K₁ , soit une clé corrélée à celle-ci elle stocke aussi en mémoire les autres paramètres contenus dans le message de la figure 3. L'autorité peut, soit précalculer ou recalculer la signature en utilisant l'algorithme de signature et la clé secrète K₁ et la comparer avec la signature reçue de l'objet portatif (étape 25) via le terminal, soit utiliser la signature reçue de l'objet portatif pour recalculer le condensé des codes de l'objet portatif en utilisant un algorithme inverse de l'algorithme de signature et, selon l'algorithme utilisé, soit la clé secrète K₁ , soit ladite clé corrélée à celle-ci ; l'autorité compare ensuite le condensé ainsi recalculé avec un condensé des codes qu'elle détient en mémoire. C'est aussi l'autorité qui déclenchera l'exécution de l'opération sensible (étape 26, figure 2) ou la mise au rebut ou le rejet de l'objet portatif (étape 27), le terminal servant seulement d'intermédiaire. On notera que la procédure en mode « terminal connecté à l'autorité » est plus fiable que celle en mode « terminal non connecté à l'autorité ».

En variante, la signature calculée par l'objet portatif n'est pas envoyée à l'extérieur juste après son calcul, mais est conservée dans l'objet portatif et mise à disposition du monde extérieur de façon qu'elle puisse être lue ultérieurement.

En cas de fraude, une clé a généralement pu être découverte par le fraudeur, permettant à celui-ci d'émettre une quantité importante d'objets portatifs clones, contenant cette clé. Ces objets portatifs contiennent un code réduit assurant seulement les fonctionnalités indispensables pour mettre en oeuvre une application que vise à utiliser le fraudeur, à l'exclusion notamment des fonctions sécuritaires : ce code est donc différent du ou des codes d'un objet portatif authentique. La procédure de la figure 2 produira une signature non conforme à la signature authentique, ce qui permettra d'écarter tous ces objets portatifs.

Si le ou les codes des objets portatifs authentiques contiennent un code machine, l'authentification est encore plus fiable. En effet, supposons que le fraudeur ait pu arriver, à l'aide de moyens très perfectionnés, à obtenir le code contenu dans un objet portatif authentique : il doit alors, pour que les objets portatifs clones puissent se faire authentifier, mettre ce code dans chaque objet portatif clone sous forme de table de données, en plus du code non authentique contenu dans les objets portatifs clones, afin que le calcul d'authentification porte sur le code authentique. En effet, l'objet portatif clone utilisera le plus souvent des moyens de traitement différents de ceux de l'objet portatif authentique, c'est-à-dire utilisant un code machine écrit dans un langage différent, ce code machine ne permettant pas d'aboutir à une authentification réussie. La nécessité, pour le fraudeur, de stocker dans chaque objet portatif, outre son propre code, celui d'un objet portatif authentique, constitue un handicap important qui est de nature à décourager la fraude.

Un premier exemple d'opération sensible à sécuriser est le suivant : il s'agit d'une opération de personnalisation d'objets portatifs constitués par des cartes à puce. Cette opération, effectuée chez une autorité, consiste à stocker, dans une zone secrète de la mémoire non volatile des cartes, des clés « émetteur » appartenant à l'organisme émetteur des cartes considérées, ainsi que des clés « applicatives », permettant aux cartes d'avoir accès à différentes applications. Le stockage de ces clés en carte ne s'effectuera que si la procédure de vérification de la figure 2 aboutit positivement.

Un deuxième exemple d'opération sensible à sécuriser est celui de la télévision à péage. Ce domaine est l'objet de fraude permanente affectant un appareil décodeur d'image utilisé dans cette application, et plus récemment les cartes utilisées en association avec cet appareil. Les cartes clones contiennent un code réduit permettant de délivrer une clé de désembrouillage de l'image de télévision.

Dans un mode de fonctionnement classique, chaque carte de télévision reçoit périodiquement des messages dits « de contrôle », qui contiennent des données de contrôle (date, droits, etc..., et une clé de désembrouillage chiffrée) ; l'ensemble de chaque message est signé. La carte vérifie la signature, puis déchiffre la clé de désembrouillage. Selon l'invention, on ne délivre pas à la carte la clé de désembrouillage mais un message du type de celui de la figure 3, lui demandant d'effectuer un calcul sur une partie du ou des code(s) de la carte, calcul dont le résultat constitue la clé de désembrouillage si et seulement si le code de la carte est authentique. On constate donc que, dans cet exemple, la carte ne transmet pas de résultat de calcul à une autorité pour son authentification, l'authentification étant implicite et se manifestant par le désembrouillage effectif de l'image de télévision.

Un troisième exemple d'opération sensible à sécuriser concerne le domaine des cartes de débit/crédit. Avant que le terminal n'autorise une opération de débit/crédit de la carte, il déclenchera la procédure de la figure 2, de préférence en mode « connecté » à une autorité bancaire.

Avantageusement, l'organisme émetteur des objets portatifs communiquera aux organismes utilisateurs de ces objets portatifs, comme moyen de vérification de l'authenticité de ces objets portatifs à l'occasion de leur personnalisation et avant leur diffusion à des usagers individuels, au moins un objet portatif de référence dûment authentifié par l'organisme émetteur. L'authentification d'un objet portatif consistera à faire calculer une signature du code à la fois dans cet objet portatif et dans l'objet portatif de référence, la comparaison des deux résultats permettant de conclure sur l'authenticité de l'objet portatif à vérifier. La sélection, par l'organisme utilisateur, de l'objet portatif de référence approprié parmi un ensemble d'objets portatifs de référence éventuellement détenus par cet organisme s'effectue au moyen des informations d'identification précitées (étape 21 de la figure 2). Ce procédé a l'avantage, pour l'organisme émetteur des objets portatifs, de ne pas communiquer aux organismes utilisateurs le contenu du (des) code(s) des objets portatifs, c'est-à-dire son savoir-faire. Il est donc plus sécuritaire pour lui.

Avantageusement, la procédure de la figure 2 sera précédée d'une opération d'authentification de la personne ou de l'organisme mettant en oeuvre cette procédure, selon des moyens connus basés sur la détention, par cette personne ou cet organisme, d'un PIN (de l'anglais Personal Identification Number) ou mieux d'une clé.

Selon une variante de réalisation de l'invention moins avantageuse, le procédé d'authentification de l'objet portatif consiste à vérifier la signature de d'une partie fixe du code contenu dans cet objet portatif, éventuellement de l'ensemble du code, et non d'une partie de celui-ci variable lors de chaque procédure d'authentification.

Selon une autre variante de réalisation de l'invention moins avantageuse, le procédé d'authentification de l'objet portatif n'inclut pas l'opération consistant à condenser le code avant sa signature.

On notera que, si le code est stocké dans l'objet portatif en laissant des espaces mémoire vides, il sera avantageux de combler ces espaces avec un code fictif qui ne remplira aucune fonction mais rendra le code plus volumineux, ce qui gênera d'autant plus le fraudeur dans sa tentative de recopier ce code sur des objets portatifs clones. Par « code fictif », on entend un code écrit dans un langage réel mais qui ne sera jamais utilisé, c'est-à-dire jamais exécuté. Par opposition, le code effectivement utilisé sera appelé « code réel ».

Il existe le risque qu'un fraudeur arrive à identifier le code manipulé lors de l'opération de signature selon l'invention, en observant le bruit généré par l'objet portatif. Selon l'invention, on limite ce risque en ne signant du code réel que de temps en temps, notamment à l'occasion d'opérations jugées cruciales du point de vue sécuritaire. Une telle opération est par exemple celle de personnalisation de l'objet portatif, dans laquelle des moyens applicatifs sont insérés dans l'objet portatif, notamment des clés et des codes applicatifs. Par contre, lors d'opérations courantes moins sensibles et plus répétitives, il sera demandé à l'objet portatif de signer du code fictif.

Il serait utile d'empêcher un fraudeur de se faire passer pour une autorité habilitée en interrogeant l'objet portatif selon la procédure de la figure 2, et en répétant cette opération un grand nombre de fois, de façon à observer les informations circulant dans l'objet portatif. A cet effet, et selon un perfectionnement de l'invention, l'objet portatif est agencé pour limiter le nombre d'appels à la routine de signature à un nombre prédéterminé.

Une application de l'invention au domaine GSM (de l'anglais « Global System for Mobile communications ») va maintenant être présentée. La figure 4 rappelle le procédé défini par les normes GSM, d'authentification par un serveur d'authentification 41, de la carte à puce 42 équipant un mobile GSM 43. On rappelle que le mobile 43 dialogue avec le serveur 41 via une base station 44. Le procédé comprend une première étape selon laquelle la carte envoie au serveur un identifiant IMSI définissant l'identité d'un abonné porteur du mobile, ainsi que l'identité de la carte, donc du code qui y est contenu. En réponse, le serveur envoie à la carte un aléa. A partir de cet aléa, la carte exécute une commande connue sous le nom de « RUN GSM ALGO » calculant une valeur d'authentification nommée SRES' et une clé K_{c} à partir d'une clé Kl propre à la carte. De son côté, le serveur calcule une valeur d'authentification de référence SRES'. La carte envoie ensuite sa valeur d'authentification SRES au serveur, lequel la compare à sa valeur d'authentification de référence SRES' afin de déterminer si la carte est authentique ou non.

Selon l'invention, le procédé d'authentification ci-dessus est modifié comme suit : au lieu d'envoyer à la carte un aléa classique constitué par un nombre défini par le serveur, celui-ci lui envoie le message de la figure 3. A réception, la carte calcule une signature de code selon l'étape 23 de la figure 2, basée sur une clé de signature déterminée K₁ . Ensuite, la carte calcule la valeur d'authentification SRES conformément aux normes GSM, mais en utilisant, en tant qu'aléa, le résultat de la signature de code au lieu de l'aléa habituellement fourni par le serveur. De préférence, le procédé selon l'invention ne sera pas mis en oeuvre lors de chaque session entre le mobile et le serveur mais seulement de temps en temps, de façon à réduire le risque qu'un fraudeur arrive à identifier le code manipulé lors de l'opération de signature selon l'invention, en observant le bruit généré par la carte.

Dans ce qui précède, on a décrit une authentification du code de l'objet portatif par calcul de signature. En variante, on peut effectuer cette authentification au moyen d'un calcul de chiffrement/déchiffrement, comme cela est connu en soi. Dans le cas d'un algorithme symétrique, l'objet portatif calculera un chiffré de son code avec une clé secrète et l'enverra au terminal ou à l'autorité qui effectuera l'authentification par chiffrement ou déchiffrement. Dans le cas d'un algorithme asymétrique, l'objet portatif calculera un chiffré de son code avec une clé publique et l'enverra au terminal ou à l'autorité qui effectuera l'authentification par chiffrement ou déchiffrement. Par ailleurs, on a présenté dans ce qui précède un calcul d'authentification qui mettait en oeuvre un algorithme cryptographique manipulant une ou plusieurs clés, dont l'une est secrète. Un tel algorithme, comme le DES ou RSA précités, est dit « trap-door one way », les termes « one way » signifiant que la fonction utilisée est à sens unique, et les termes « trap-door » signifiant qu'il existe un secret. On rappelle qu'une fonction à sens unique est une fonction qui peut être calculée dans un sens sans information particulière, mais qui ne peut pas être calculée de façon inverse, sauf éventuellement si l'on connaît certains paramètres. Dans le cas du DES et du RSA, ces paramètres consistent dans la clé secrète. Selon l'invention, l'utilisation d'une fonction « trap-door » est intéressante en ce qu'elle apporte une sécurité supplémentaire basée sur la clé secrète, mais elle n'est pas nécessaire : il suffit en effet, pour réaliser l'opération d'authentification du code de l'objet portatif, d'effectuer un calcul sur ce code avec toute fonction à sens unique, en l'absence de toute manipulation de clé. Une fonction à sens unique est notamment une fonction de hachage telle que MD5 ou SHA citées précédemment.

## Revendications

1. Procédé pour authentifier un objet portatif (7) comprenant des moyens de traitement d'information (8) et des moyens de mémorisation d'information (9,10), les moyens de mémorisation d'information contenant au moins un code (i) définissant des opérations susceptibles d'être exécutées par l'objet portatif, ainsi qu'une fonction à sens unique, **caractérisé en ce qu'**il comprend :
- une utilisation d'un dispositif de traitement d'information (1) pour communiquer avec l'objet portatif (7),
- une étape consistant à envoyer à l'objet portatif, depuis le dispositif de traitement d'information (1), un ordre (31,32i-34i, 35,36) pour que cet objet portatif exécute un calcul d'un résultat en appliquant à ladite fonction à sens unique au moins une partie dudit code (i), et
- une étape consistant à faire intervenir ledit résultat dans la mise en oeuvre d'une opération déterminée, cette opération n'étant réalisée avec succès que dans le cas où l'objet portatif (7) est authentique.

2. Procédé selon la revendication 1, dans lequel ladite opération déterminée comprend un déchiffrement d'information, ledit résultat permettant de produire une clé de déchiffrement associée.

3. Procédé selon la revendication 1, dans lequel ladite partie de code (i) utilisée dans le calcul comprend une partie de code machine.

4. Procédé selon la revendication 1, dans lequel l'objet portatif (7) contient un code dit "réel" définissant des opérations destinées à être exécutées par l'objet portatif, et un code dit "fictif" définissant des opérations non destinées à être exécutées par l'objet portatif, ladite partie de code utilisée dans le calcul comprenant une partie de code fictif.

5. Procédé selon la revendication 1, dans lequel ledit ordre (31,32i-34i, 35,36) est envoyé de façon répétitive à l'objet portatif au cours de sa vie, avant l'exécution, par celui-ci, desdites opérations.

6. Procédé selon la revendication 1, dans lequel ladite partie de code (i) utilisée dans le calcul est définie par une adresse de début (32i) et une adresse de fin (33i) dans les moyens de mémorisation d'information, lesdites adresses étant envoyées à l'objet portatif.

7. Procédé selon la revendication 1, dans lequel ledit code (i) comprend un ensemble de mots binaires, ladite partie de code utilisée dans le calcul étant définie par un sous ensemble de mots binaires comprenant les mots binaires répartis dans les moyens de mémorisation d'information selon un pas déterminé (34i), ledit pas étant envoyé à l'objet portatif.

8. Procédé selon la revendication 1, **caractérisé en ce qu'**une opération sensible est exécutée par l'objet portatif (7) authentifié.

9. Procédé selon la revendication 8, dans lequel ladite partie de code (i) utilisée dans le calcul comprend une partie de code machine.

10. Procédé selon la revendication 8, dans lequel l'objet portatif (7) contient un code dit "réel" définissant des opérations destinées à être exécutées par l'objet portatif, et un code dit "fictif" définissant des opérations non destinées à être exécutées par l'objet portatif, ladite partie de code utilisée dans le calcul comprenant une partie de code fictif.

11. Objet portatif comprenant des moyens de traitement d'information et des moyens de mémorisation d'information (9,10), les moyens de mémorisation d'information contenant au moins un code (i) définissant des opérations susceptibles d'être exécutées par l'objet portatif, ainsi qu'une fonction à sens unique, **caractérisé en ce qu'**il comprend des moyens pour exécuter un calcul d'un résultat en appliquant à ladite fonction à sens unique au moins une partie dudit code, les moyens de traitement d'information (8) étant connectés à des moyens (11) pour coopérer avec un dispositif externe de traitement d'information (1) distinct de l'objet portatif (7), afin de recevoir d'un tel dispositif externe de traitement d'information (1) un ordre (31,32i-34i, 35,36) d'exécution dudit calcul, ledit résultat intervenant dans la mise en oeuvre d'une opération déterminée, cette opération n'étant réalisée avec succès que dans le cas où l'objet portatif (7) est authentique.

12. Objet portatif selon la revendication 11, dans lequel ladite partie de code (i) utilisée dans le calcul comprend une partie de code machine.

13. Appareil (1) comprenant des moyens de traitement d'information (2) et des moyens de mémorisation d'information (3,4) et agencé pour communiquer avec un objet portatif (7) afin d'authentifier celui-ci, l'objet portatif comprenant des moyens de traitement d'information (8) et des moyens de mémorisation d'information (9,10), les moyens de mémorisation d'information de l'objet portatif contenant au moins un code (i) définissant des opérations susceptibles d'être exécutées par l'objet portatif, ainsi qu'une fonction à sens unique, **caractérisé en ce qu'**il comprend des moyens pour envoyer à l'objet portatif un ordre (31,32i-34i, 35,36) pour que celui-ci exécute un calcul d'un résultat en appliquant à ladite fonction à sens unique au moins une partie dudit code (i) de l'objet portatif, ledit résultat intervenant dans la mise en oeuvre d'une opération déterminée, cette opération n'étant réalisée avec succès que dans le cas où l'objet portatif (7) est authentique.

14. Appareil selon la revendication 13, dans lequel ladite partie de code (i) utilisée dans le calcul comprend une partie de code machine.

## Claims

1. Method to authenticate a portable object (7) comprising information processing means (8) and information storage means (9, 10), the information storage means containing at least a code (i) defining operations likely to be executed by the portable object, as well as a one-way function, **characterised in that** it comprises:
- use of an information processing device (1) to communicate with the portable object (7),
- a step which consists in sending to the portable object, from the information processing device (1), an instruction (31, 321-34i, 35, 36) so that this portable object executes a calculation of a result by applying to said one-way function at least a section of said code (i), and
- a step which consists in using said result in the implementation of a given operation, this operation only being carried out successfully if the portable object (7) is authentic.

2. Method according to claim 1, in which said given operation comprises decryption of information, said result being used to produce an associated decryption key.

3. Method according to claim 1, in which said code section (i) used in the calculation comprises a machine code section.

4. Method according to claim 1, in which the portable object (7) contains a "real" code defining operations designed to be executed by the portable object, and a "dummy" code defining operations not designed to be executed by the portable object, said code section used in the calculation comprising a dummy code section.

5. Method according to claim 1, in which said instruction (31, 32i-34i, 35, 36) is sent repeatedly to the portable object during its life, before execution of said operations, by the portable object.

6. Method according to claim 1, in which said code section (i) used in the calculation is defined by a start address (32i) and an end address (33i) in the information storage means, said addresses being sent to the portable object.

7. Method according to claim 1, in which said code (i) comprises a set of binary words, said code section used in the calculation being defined by a subset of binary words comprising the binary words distributed in the information storage means according to a given step (34i), said step being sent to the portable object.

8. Method according to claim 1, **characterised in that** a sensitive operation is executed by the authenticated portable object (7).

9. Method according to claim 8, in which said code section (i) used in the calculation comprises a machine code section.

10. Method according to claim 8, in which the portable object (7) contains a "real" code defining operations designed to be executed by the portable object, and a "dummy" code defining operations not designed to be executed by the portable object, said code section used in the calculation comprising a dummy code section.

11. Portable object comprising information processing means and information storage means (9, 10), the information storage means containing at least a code (i) defining operations likely to be executed by the portable object, as well as a one-way function, **characterised in that** it comprises means to execute a calculation of a result by applying to said one-way function at least a section of said code, the information processing means (8) being connected to means (11) to cooperate with an external information processing device (1) separate from the portable object (7), in order to receive from such external information processing device (1) an instruction (31, 32i-341, 35, 36) to execute said calculation, said result being used in the implementation of a given operation, this operation only being carried out successfully if the portable object (7) is authentic.

12. Portable object according to claim 11, in which said code section (i) used in the calculation comprises a machine code section.

13. Device (1) comprising information processing means (2) and information storage means (3, 4) and designed to communicate with a portable object (7) in order to authenticate it, the portable object comprising information processing means (8) and information storage means (9, 10), the information storage means of the portable object containing at least a code (i) defining operations likely to be executed by the portable object, as well as a one-way function, **characterised in that** it comprises means to send to the portable object an instruction (31, 32i-341, 35, 36) for it to execute a calculation of a result by applying to said on-way function at least a section of said code (i) of the portable object, said result being used in the implementation of a given operation, this operation only being carried out successfully if the portable object (7) is authentic.

14. Device according to claim 13, in which said code section (i) used in the calculation comprises a machine code section.

## Patentansprüche

1. Verfahren zum Authentifizieren eines tragbaren Objekts (7) mit Mitteln zur Datenverarbeitung (8) und Mitteln zur Datenspeicherung (9, 10), wobei die Mittel zur Datenspeicherung mindestens einen Code (i) enthalten, der Operationen definiert, die vom tragbaren Objekt ausgeführt werden können, sowie eine monodirektionale Funktion, **dadurch gekennzeichnet, dass** es umfasst:
- eine Anwendung einer Vorrichtung zur Datenverarbeitung (1), um mit dem tragbaren Objekt (7) zu kommunizieren,
- einen Schritt, der darin besteht, von der Vorrichtung zur Datenverarbeitung (1) ausgehend einen Befehl (31, 32i-34i, 35, 36) an das tragbare Objekt zu senden, damit dieses tragbare Objekt eine Berechnung eines Resultats ausführt, indem auf die besagte monodirektionale Funktion mindestens ein Teil des besagten Codes (i) angewendet wird, und
- einen Schritt, der darin besteht, das besagte Resultat bei der Umsetzung einer bestimmten Operation mitwirken zu lassen, wobei diese Operation nur dann mit Erfolg durchgeführt wird, wenn das tragbare Objekt (7) authentisch ist.

2. Verfahren gemäß Anspruch 1, bei dem die besagte bestimmte Operation eine Datenentschlüsselung umfasst, wobei das besagte Resultat ermöglicht, einen zugeordneten Entschlüsselungsschlüssel zu erstellen.

3. Verfahren gemäß Anspruch 1, bei dem besagter, für die Berechnung verwendeter Teil des Codes (i) einen Teil des Maschinencodes umfasst.

4. Verfahren gemäß Anspruch 1, bei dem das tragbare Objekt (7) einen als "reell" bezeichneten Code enthält, der Operationen definiert, welche zur Ausführung durch das tragbare Objekt bestimmt sind, sowie einen als "fiktiv" bezeichneten Code, der Operationen definiert, welche nicht zur Ausführung durch das tragbare Objekt bestimmt sind, wobei der besagte, für die Berechnung verwendete Teil des Codes einen Teil des fiktiven Codes umfasst.

5. Verfahren gemäß Anspruch 1, bei dem der besagte Befehl (31, 32i-34i, 35, 36) wiederholt an das tragbare Objekt während dessen Lebensdauer gesendet wird, bevor dieses die besagten Operationen durchführt.

6. Verfahren gemäß Anspruch 1, bei dem der besagte, für die Berechnung verwendete Teil des Codes (i) durch eine Anfangsadresse (32i) und eine Endadresse (33i) in den Mitteln zur Datenspeicherung definiert wird und diese Adressen an das tragbare Objekt gesendet werden.

7. Verfahren gemäß Anspruch 1, bei dem der besagte Code (i) eine Einheit von binären Worten umfasst und der besagte, für die Berechnung verwendete Teil des Codes durch eine Untereinheit von binären Worten definiert ist, die die binären Worte umfasst, welche in den Mitteln zur Datenspeicherung gemäß einer bestimmten Schrittweite (34i) verteilt sind und bei dem diese Schrittweite an das tragbare Objekt gesendet wird.

8. Verfahren gemäß Anspruch 1, **dadurch gekennzeichnet, dass** das authentifizierte tragbare Objekt (7) eine sensible Operation durchführt.

9. Verfahren gemäß Anspruch 8, bei dem der besagte, für die Berechnung verwendete Teil des Codes (i) einen Teil des Maschinencodes umfasst.

10. Verfahren gemäß Anspruch 8, bei dem das tragbare Objekt (7) einen als "reell" bezeichneten Code enthält, der Operationen definiert, welche zur Ausführung durch das tragbare Objekt bestimmt sind, sowie einen als "fiktiv" bezeichneten Code, der Operationen definiert, welche nicht zur Ausführung durch das tragbare Objekt bestimmt sind, wobei der besagte, für die Berechnung verwendete Teil des Codes einen Teil des fiktiven Codes umfasst.

11. Tragbares Objekt mit Mitteln zur Datenverarbeitung und Mitteln zur Datenspeicherung (9,10), wobei die Mittel zur Datenspeicherung mindestens einen Code (i) enthalten, der Operationen definiert, die vom tragbaren Objekt ausgeführt werden können, sowie eine monodirektionale Funktion, **dadurch gekennzeichnet, dass** es Mittel zur Ausführung einer Berechnung eines Resultats umfasst, indem auf die besagte monodirektionale Funktion mindestens ein Teil des besagten Codes angewendet wird, wobei die Mittel zur Datenverarbeitung (8) an die Mittel (11) zum Zusammenwirken mit einer externen Vorrichtung zur Datenverarbeitung (1) angeschlossen sind, die sich vom tragbaren Objekt (7) unterscheidet, um von einer solchen externen Vorrichtung zur Datenverarbeitung (1) einen Befehl (31, 32i-34i, 35, 36) zur Ausführung der besagten Berechnung zu erhalten, wobei das besagte Resultat bei der Umsetzung einer bestimmten Operation beteiligt ist und diese Operation nur dann mit Erfolg durchgeführt wird, wenn das tragbare Objekt (7) authentisch ist.

12. Tragbares Objekt gemäß Anspruch 11, bei dem der besagte, für die Berechnung verwendete Teil des Codes (i) einen Teil des Maschinencodes umfasst.

13. Gerät (1) mit Mitteln zur Datenverarbeitung (2) und Mitteln zur Datenspeicherung (3,4), das angeordnet ist, um mit einem tragbaren Objekt (7) zu kommunizieren und dieses zu authentifizieren, wobei das tragbare Objekt Mittel zur Datenverarbeitung (8) und Mittel zur Datenspeicherung (9, 10) umfasst, wobei die Mittel zur Datenspeicherung des tragbaren Objekts mindestens einen Code (i) enthalten, der Operationen definiert, die vom tragbaren Objekt ausgeführt werden können, sowie eine monodirektionale Funktion, **dadurch gekennzeichnet, dass** es Mittel zum Senden eines Befehls (31, 32i-34i, 35, 36) an das tragbare Objekt umfasst, damit dieses eine Berechnung eines Resultats ausführt, indem auf die besagte monodirektionale Funktion mindestens ein Teil des besagten Codes (1) des tragbaren Objekts angewendet wird, wobei das besagte Resultat bei der Umsetzung einer bestimmten Operation beteiligt ist und diese Operation nur dann mit Erfolg durchgeführt wird, wenn das tragbare Objekt (7) authentisch ist.

14. Gerät gemäß Anspruch 13, bei dem der besagte, für die Berechnung verwendete Teil des Codes (i) einen Teil des Maschinencodes umfasst.
